# EUROPÄISCHE PATENTSCHRIFT

(11) **EP 3 199 856 B1**
(45) Veröffentlichungstag und Bekanntmachung des Hinweises auf die Patenterteilung: **06.03.2019**
(21) Anmeldenummer: 17152480.4
(22) Anmeldetag: 20.01.2017
(51) Int. Cl.: F16L 37/138, F16L 37/14, F16L 37/084, F16L 37/42

(54) **KUPPLUNGSVORRICHTUNG UMFASSEND EINEN KUPPLUNGSGRUNDKÖRPER UND EINEN KUPPLUNGSSTECKER**
COUPLING DEVICE COMPRISING A COUPLING BASE BODY AND A COUPLING INSERT
DISPOSITIF D'ACCOUPLEMENT COMPRENANT UN CORPS DE BASE D'ACCOUPLEMENT ET UNE FICHE D'ACCOUPLEMENT

(30) Priorität: 28.01.2016 DE 102016201247
(43) Veröffentlichungstag der Anmeldung: 02.08.2017
(73) Patentinhaber: Krausser, Antje, 92360 Mühlhausen (DE)
(72) Erfinder: Krausser, Antje, 92360 Mühlhausen (DE)
(74) Vertreter: Rau, Schneck & Hübner Patentanwälte Rechtsanwälte PartGmbB

(56) Entgegenhaltungen:
- EP-A2- 1 298 378
- US-A1- 2004 178 629
- US-A1- 2010 176 590
- US-A1- 2014 103 644

## Beschreibung

Die vorliegende Patentanmeldung nimmt die Priorität der deutschen Patentanmeldung DE 10 2016 201 247.9 in Anspruch. Die Erfindung betrifft eine Kupplungsvorrichtung mit einem Kupplungsgrundkörper und einem Kupplungsstecker.

Kupplungsvorrichtungen sind bekannt aus der US 2014/0 103 644 A1, der US 2004/0 178 629 A1 und der US 2010/0 176 590 A1.
Eine Kupplungsvorrichtung für eine Druckluftleitung dient insbesondere zum Verbinden von Druckluftleitungsabschnitten. Eine Druckluftleitung kann beispielsweise zur Verbindung mit einem Rohrsanierungspacker oder mit einer Absperrblase dienen. Rohrsanierungspacker und/oder mit Luftschiebestangen verbundene Absperrblasen werden typischerweise in Abwasserkanalrohren eingesetzt, die zumindest abschnittsweise nicht linear ausgeführt und/oder schwer oder nicht zugänglich sind. Eine bekannte Kupplungsvorrichtung weist eine Schraubsicherung oder Verdrehsicherung gegen unbeabsichtigtes Öffnen der Kupplungsverbindung auf. Um die durch die Kupplungsvorrichtung miteinander verbundenen Gegenständen in dem Abwasserkanal voranzutreiben, können äußere Kräfte ein Lösen der Schraubsicherung bewirken.
Es ist eine Aufgabe der vorliegenden Erfindung eine Kupplungsvorrichtung für eine Druckluftleitung bereitzustellen, bei der ein Kupplungsgrundkörper mit einem Kupplungsstecker verdrehsicher verbindbar ist.

Diese Aufgabe ist erfindungsgemäß gelöst durch eine Kupplungsvorrichtung mit den im Anspruch 1 angegebenen Merkmalen.

Erfindungsgemäß wurde erkannt, dass ein Kupplungsgrundkörper für eine Kupplungsvorrichtung mindestens ein Verdrehschutzelement zum Verdrehsichern des Kupplungsgrundkörpers mit dem Kupplungsstecker aufweist. Dadurch ist es möglich, dass der Kupplungsgrundkörper mit dem Kupplungsstecker zu der Kupplungsvorrichtung verbunden werden kann, wobei eine Drehbeanspruchung der Kupplungsvorrichtung, insbesondere bei einem Einsatz in einem Abwasserkanalrohr nicht zu einem unbeabsichtigten Öffnen der Kupplungsvorrichtung führt. Ein unbeabsichtigtes Öffnen der Kupplungsvorrichtung infolge einer Drehbewegung ist ausgeschlossen. Gleichwohl ist ein kontrolliertes Öffnen, also der Entkopplung der Kupplungsvorrichtung ermöglicht. Der Kupplungsgrundkörper weist ferner eine Längsachse und einen sich entlang der Längsachse erstreckenden Aufnahmeabschnitt zur Aufnahme des Kupplungssteckers auf. Der Aufnahmeabschnitt ist insbesondere zumindest abschnittsweise hülsenartig ausgeführt, in den der Kupplungsstecker eingesteckt werden kann. Der Kupplungsgrundkörper ist insbesondere einteilig ausgeführt. Der Kupplungsgrundkörper weist eine robuste und stabile Konstruktion auf. Insbesondere ist der Kupplungsgrundkörper aus einem mechanisch robusten, insbesondere aus einem hochfesten und insbesondere aus einem korrosionsbeständigen Material hergestellt. Insbesondere ist der Kupplungsgrundkörper aus Edelstahl hergestellt. Insbesondere wird ein Chrom-Nickel-Stahl, insbesondere Edelstahl mit der Werkstoffnummer 1.4305 verwendet. Insbesondere ist der Kupplungsgrundkörper aus einem Material hergestellt, das eine Härte von mindestens 200 HB, insbesondere mindestens 210 HB und insbesondere mindestens 215 HB aufweist. Die Zugfestigkeit des verwendeten Materials beträgt mindestens 350 N/mm², insbesondere mindestens 450 N/mm², insbesondere mindestens 500 N/mm² und insbesondere mindestens 550 N/mm².

Das verwendete Material ist korrosionsbeständig und kann insbesondere mit einer Korrosionsschutzschicht versehen sein. Das Material kann beispielsweise ein Nicht-Eisen-Werkstoff, insbesondere Messing, sein. Als Korrosionsschutzschicht kann beispielsweise Nickel verwendet werden.

Erfindungsgemäß wurde ferner erkannt, dass ein Kupplungsstecker für eine Kupplungsvorrichtung mindestens ein Verdrehschutzgegenelement aufweist, das zum Verdrehsichern des Kupplungssteckers mit dem Kupplungsgrundkörper dient. Der Kupplungsstecker weist insbesondere einen Steckabschnitt auf, der zum Einstecken in den Kupplungsgrundkörper dient, insbesondere in den Aufnahmeabschnitt des Kupplungsgrundkörpers. Der Kupplungsstecker wird auch als Stecknippel bezeichnet.

Erfindungsgemäß wurde weiter erkannt, dass die Kupplungsvorrichtung den Kupplungsgrundkörper und den lösbar damit verbindbaren Kupplungsstecker aufweist, wobei der Kupplungsgrundkörper und der Kupplungsstecker in einer verbundenen Anordnung verdrehsicher bezüglich der Längsachse miteinander verbunden sind. Die Kupplungsvorrichtung ermöglicht eine stabile, unkomplizierte und insbesondere kleinbauende Verbindung. Gegenüber bekannten Kupplungsvorrichtungen ist der Außendurchmesser der Kupplungsvorrichtung und/oder die Länge der Kupplungsvorrichtung entlang der Längsachse reduziert, insbesondere um mindestens 5 %, insbesondere um mindestens 10 %, insbesondere um mindestens 20 %, insbesondere um mindestens 30 %, insbesondere um mindestens 40 % und insbesondere um bis zu 45 %.

Die Kupplungsvorrichtung kann aufgrund der kurzbauenden Ausführung vorteilhafterweise auch um Bögen in einer Rohrleitung geführt werden.

Die Kupplungsvorrichtung dient zum Einsatz für die Rohrsanierung mittels sogenannter Packer. Dazu kann die Kupplungsvorrichtung mit einer sogenannten Packer-Komponente verbunden sein. Eine Packer-Komponente ist beispielsweise eine Schiebestange, ein pneumatischer Bogensanierungspacker für Rohrbögen, ein pneumatischer Rohrsanierungspacker und/oder eine Absperrblase für geradlinige, also ungebogene KG-, SML- und Steinzeugrohre.

Ein System umfassend mindestens eine der vorstehend aufgeführten Packer-Komponenten mit der Kupplungsvorrichtung ermöglicht eine vorteilhafte Druckluftkupplung für Rohrsanierungsanwendungen.

Die Sicherungseinheit zum Sichern des mit dem Kupplungsgrundkörper verbundenen Kupplungssteckers garantiert ein Sichern der Verbindung gegen unbeabsichtigtes Öffnen bei ordnungsgemäßer Bedienung. Die Sicherheit ist zusätzlich erhöht. Unbeabsichtigtes Entriegeln der Kupplungsvorrichtung ist verhindert. Insbesondere ist die Sicherungseinheit am Kupplungsgrundkörper angeordnet.

Die Sicherungseinheit, die zwischen einer Sicherungsposition und einer Entriegelungsposition verlagerbar ist, dient gleichzeitig als Entriegelungseinheit. Die Sicherungseinheit kann zwischen einer Sicherungsposition und einer Entriegelungsposition verlagert werden. In der Sicherungsposition ist der Kupplungsgrundkörper mit dem Kupplungsstecker verbunden. In der Sicherungsposition ist die Verbindung gesichert. In der Entriegelungsposition ist die Verbindung zwischen dem Kupplungsgrundkörper und dem Kupplungsstecker zur Trennung vorbereitet. Durch Überführen der Sicherungseinheit von der Sicherungsposition in die Entriegelungsposition kann die Verbindung getrennt werden.

Die Sicherungseinheit ist am Kupplungsgrundkörper in axialer Richtung der Längsachse verlagerbar, also schiebbar oder schraubbar ausgeführt. In der Sicherungsposition ist die Sicherungseinheit um die Längsachse drehbar am Kupplungsgrundkörper angeordnet.

Die Ausführung des Aufnahmeabschnitts als Standardgeometrie gemäß Anspruch 2 ermöglicht eine unkomplizierte Kopplung des Kupplungsgrundkörpers mit anderen Kupplungssteckern. Insbesondere kann der erfindungsgemäße Kupplungsgrundkörper mit Kupplungssteckern, die auf dem Markt bereits verfügbar sind, gekoppelt werden. Der Kupplungsgrundkörper ist mit handelsüblichen Eurosteckern beispielsweise mit einer Nennweite von 7.0, 7.2 und/oder 7.8 koppelbar.

Insbesondere weist der Kupplungsgrundkörper einen Anbindungsabschnitt auf zum Anbinden des Kupplungsgrundkörpers an eine Druckluftleitung. Der Kupplungsgrundkörper ist insbesondere mit einer Absperrblase, die als Gummiblase ausgeführt ist, oder einem Sanierungspacker verbunden. Der Anbindungsabschnitt ist insbesondere mit einem Außengewinde versehen. Das Außengewinde ist insbesondere ein standardisiertes Außengewinde, insbesondere in Form eines Whitworth-Rohrgewindes, also ein zylindrisches Gewinde nach ISO 228-1. Der Gewindedurchmesser kann 1/4 Zoll oder 1/8 Zoll betragen.

Eine Verriegelungskulisse gemäß Anspruch 3 ermöglicht eine schaltbare Verriegelung der Kupplungsvorrichtung, also der Verriegelung des Kupplungssteckers mit dem Kupplungsgrundkörper.

Eine Verriegelungskulisse gemäß Anspruch 4 gewährleistet verschiedene Schaltzustände der Verriegelung in Abhängigkeit der axialen Position der Verriegelungskulisse. Es ist insbesondere möglich, unterschiedliche Schaltzustände durch Anordnen von Elementen entlang der Längsachse gezielt einzustellen.

Das Verdrehschutzelement gemäß Anspruch 5 ist unkompliziert ausgeführt. Das Verdrehschutzelement ist einteilig am Kupplungsgrundkörper angeformt. Dadurch, dass das Verdrehschutzelement exzentrisch zur Längsachse angeordnet ist, kann eine Drehbewegung des Kupplungsgrundkörpers um die Längsachse auf den gekoppelten Kupplungsstecker übertragen werden.

Wesentlich ist, dass in der verbundenen Anordnung von Kupplungsstecker und Kupplungsgrundkörper das Verdrehschutzelement und das Verdrehschutzgegenelement derart miteinander korrespondieren, dass die Verdrehsicherung der Kupplungsvorrichtung um die Längsachse gewährleistet ist. Ein Verdrehschutz ist dadurch gesichert, dass eine Drehbewegung um die Längsachse des Kupplungsgrundkörpers unmittelbar auf den Kupplungsstecker und umgekehrt übertragen wird. Verdrehschutz bedeutet also, dass verhindert ist, dass der Kupplungsstecker gegenüber dem Kupplungsgrundkörper oder umgekehrt drehbar ist.

Die Ausführung des Steckabschnitts als Standardgeometrie gemäß Anspruch 6 ermöglicht eine unkomplizierte und unmittelbare Kopplung mit bereits am Markt befindlichen Kupplungselementen. Die Standardgeometrie ist insbesondere die Geometrie einer Eurosteckverbindung mit einer Nennweite von beispielsweise 7.0, 7.2 oder 7.8. Insbesondere korrespondiert die Standardgeometrie des Kupplungssteckers mit der des Kupplungsgrundkörpers. Der Kupplungsstecker weist insbesondere einen Anbindungsabschnitt zum Anbinden an eine Druckluftleitung, insbesondere in Form eines Schiebestrangs, auf. Der Anbindungsabschnitt ist insbesondere identisch zu dem des Kupplungsgrundkörpers ausgeführt. Der Anbindungsabschnitt weist ein Außengewinde auf, das insbesondere als standardisiertes Außengewinde ausgeführt ist. Insbesondere handelt es sich dabei um ein Whitworth-Rohrgewinde, also ein zylindrisches Gewinde nach ISO 228-1. Der Gewindedurchmesser kann 1/4 Zoll oder 1/8 Zoll betragen.

Ein Verdrehschutzgegenelement gemäß Anspruch 7 gewährleistet eine unmittelbare und unkomplizierte Übertragung eines Drehmoments zwischen dem Kupplungsstecker und dem Kupplungsgrundkörper. Das Verdrehschutzgegenelement ist insbesondere als Axialausnehmung ausgeführt, in der das Verdrehschutzelement in der verbundenen Anordnung der Kupplungsvorrichtung zumindest abschnittsweise einliegen kann. Insbesondere sind die Axialausnehmung und der Axialstift korrespondierend zueinander ausgeführt. Insbesondere kann der Axialstift durch eine Verlagerung des Kupplungssteckers entlang der Längsachse in die Axialausnehmung eingeführt werden.

Eine Sicherungseinheit gemäß Anspruch 8 stellt sicher, dass diese auch im entkoppelten Zustand des Kupplungsgrundkörpers vom Kupplungsstecker nicht verloren geht. Insbesondere ist ein Haltering in einer Außen-Umfangsnut am Kupplungsgrundkörper vorgesehen, der die axiale Fixierung der Sicherungseinheit am Kupplungsgrundkörper gewährleistet.

Eine Sicherungseinheit mit einer Sicherungshülse gemäß Anspruch 9 ermöglicht eine hohe Funktionsintegration. Der konstruktive Aufwand für die Kupplungsvorrichtung ist reduziert. Die Sicherungshülse wirkt mit einem Verriegelungselement zusammen. Das Verriegelungselement ist bezüglich der Längsachse insbesondere zwischen der Sicherungshülse und dem Kupplungsgrundkörper angeordnet. Das Verriegelungselement ist von der Sicherungshülse zuverlässig an der Kupplungsvorrichtung gehalten.

Eine Anordnung des Verriegelungselements gemäß Anspruch 10 ermöglicht eine vorteilhafte Betätigung der Sicherungseinheit. Dadurch, dass das Verriegelungselement in der Verriegelungskulisse angeordnet ist, kann es in der Sicherungsposition zum Verriegeln in den Aufnahmeabschnitt hineinragen und den Kupplungsstecker axial halten. Der Kupplungsstecker ist gegen unbeabsichtigtes Herausziehen aus dem Aufnahmeabschnitt gesichert. Zum Entriegeln der Kupplungsvorrichtung kann das Verriegelungselement mittels der Sicherungshülse aus der Verriegelungskulisse geschoben werden. Das Verriegelungselement ist insbesondere stiftförmig ausgeführt und erstreckt sich insbesondere zumindest abschnittsweise senkrecht und beabstandet zur Längsachse. Zusammen mit der Sicherungshülse wird das Verriegelungselement axial verlagert und aus der Verriegelungskulisse, zumindest bereichsweise so weit, entfernt, dass der in dem Aufnahmeabschnitt angeordnete Kupplungsstecker freigegeben wird. Insbesondere ist die Verriegelungskulisse derart gestaltet, dass eine Verlagerung des Verriegelungselements entlang der Längsachse dazu führt, dass das Verriegelungselement radial nach außen, als vom Aufnahmeabschnitt weg, gedrückt wird.

Die Ausführung der Sicherungseinheit gemäß Anspruch 11 ermöglicht eine zusätzliche Sicherung bei der Handhabung der Kupplungsvorrichtung. Mittels eines Blockierstegs kann die Axialverlagerung der Sicherungseinheit blockiert werden. Dadurch ist gewährleistet, dass ein unbeabsichtigtes Betätigen der Sicherungseinheit und damit ein unbeabsichtigtes Entriegeln der Verbindung zwischen Kupplungsgrundkörper und Kupplungsstecker ausgeschlossen ist. Um das Entriegeln gezielt zu ermöglichen, kann der Blockiersteg in der Entriegelungsposition in einer Entriegelungsaufnahme angeordnet sein. Dazu ist es insbesondere erforderlich, die Sicherungseinheit in eine Drehposition gegenüber dem Kupplungsgrundkörper zu verlagern, sodass der Blockiersteg und die Entriegelungsaufnahme entlang der Längsachse fluchtend angeordnet sind. Die Entriegelungsaufnahme ist insbesondere an einem äußeren Sicherungsringsteg angeordnet, der insbesondere an einer Außenfläche des Kupplungskörpers angeordnet ist und insbesondere an der Außenfläche einteilig angeformt ist.

Alternativ kann die Sicherungseinheit als Schraubverbindung ausgeführt sein. Dazu kann die Sicherungshülse einen Verbindungsgewindeabschnitt aufweisen, der mit einem Verbindungsgewindegegenabschnitt des Kupplungsgrundkörpers zusammenwirken kann. In der Sicherungsposition ist die Sicherungshülse mit dem Verbindungsgewindeabschnitt an dem Verbindungsgewindegegenabschnitt des Kupplungsgrundkörpers verbunden. In der Sicherungsposition ist die Sicherungshülse an dem Kupplungsgrundkörper gesichert. Ein unbeabsichtigtes Lösen der Schraubverbindung zwischen der Sicherungshülse und dem Kupplungsgrundkörper ist verhindert.

In dieser Anordnung wird das Verriegelungselement zum Verriegeln des Kupplungssteckers in der Verriegelungskulisse gehalten. Die Verbindung zwischen dem Kupplungsgrundkörper und dem Kupplungsstecker ist gewährleistet. Die Kupplungsvorrichtung ist verriegelt.

Zum Überführen der Sicherungseinheit in die Entriegelungsposition kann die Schraubverbindung zwischen der Sicherungshülse und dem Kupplungsgrundkörper gelöst werden. Dadurch kann die Sicherungshülse von dem Verriegelungselement entfernt und das Verriegelungselement aus der Verriegelungskulisse freigegeben werden. Ein Lösen der Kupplungsvorrichtung ist ermöglicht. Der Kupplungsstecker kann von Kupplungsgrundkörper abgezogen, also getrennt werden.

Ein Ausführungsbeispiel der Erfindung wird nachfolgend anhand der Zeichnung näher erläutert. In dieser zeigen:
- Fig. 1: eine Seitenansicht einer erfindungsgemäßen Kupplungsvorrichtung in einer Sicherungsposition, in der eine Druckluftströmung durch die Kupplungsvorrichtung ermöglicht ist,
- Fig. 2: eine weitere, um 90° um eine Längsachse gedrehte Seitenansicht der Kupplungsvorrichtung gemäß Fig. 1,
- Fig. 3: eine Fig. 1 entsprechende Ansicht der Kupplungsvorrichtung in einer Entriegelungsposition, in der eine Druckluftströmung durch die Kupplungsvorrichtung, insbesondere durch den Kupplungsgrundkörper, verhindert ist,
- Fig. 4: eine Fig. 2 entsprechende Darstellung der Kupplungsvorrichtung in Fig. 3,
- Fig. 5: eine Fig. 1 entsprechende Seitenansicht eines erfindungsgemäßen Kupplungsgrundkörpers,
- Fig. 6: eine Fig. 2 entsprechende Ansicht des Kupplungsgrundkörpers in Fig. 5,
- Fig. 7: eine Fig. 1 entsprechende Darstellung eines erfindungsgemäßen Kupplungssteckers,
- Fig. 8: eine Fig. 2 entsprechende Ansicht des Kupplungssteckers gemäß Fig. 7,
- Fig. 9: einen Längsschnitt der Kupplungsvorrichtung in der Sicherungsposition und
- Fig. 10: einen Fig. 9 entsprechenden Längsschnitt des Kupplungsgrundkörpers in der getrennten Anordnung vom Kupplungsstecker.

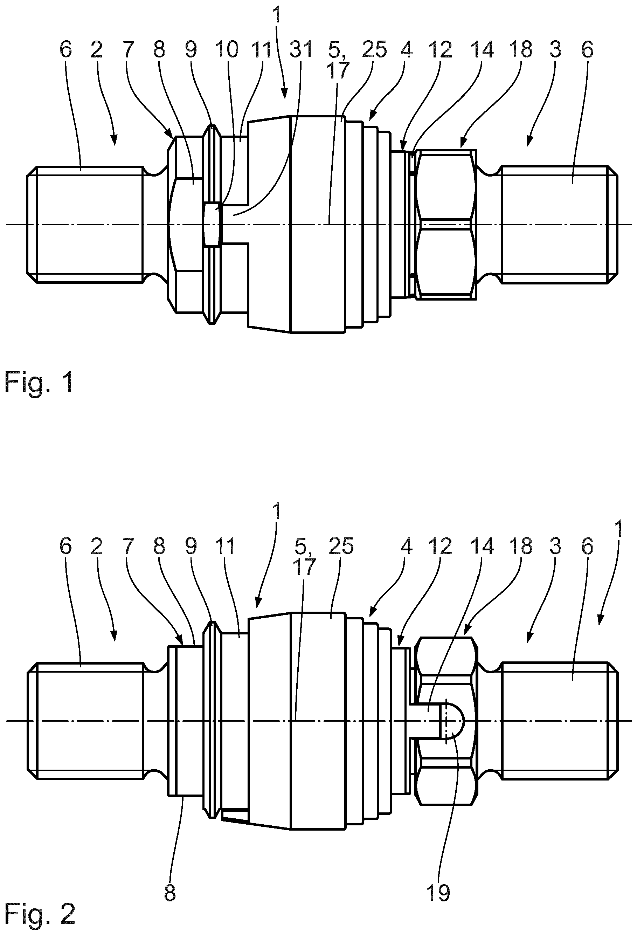

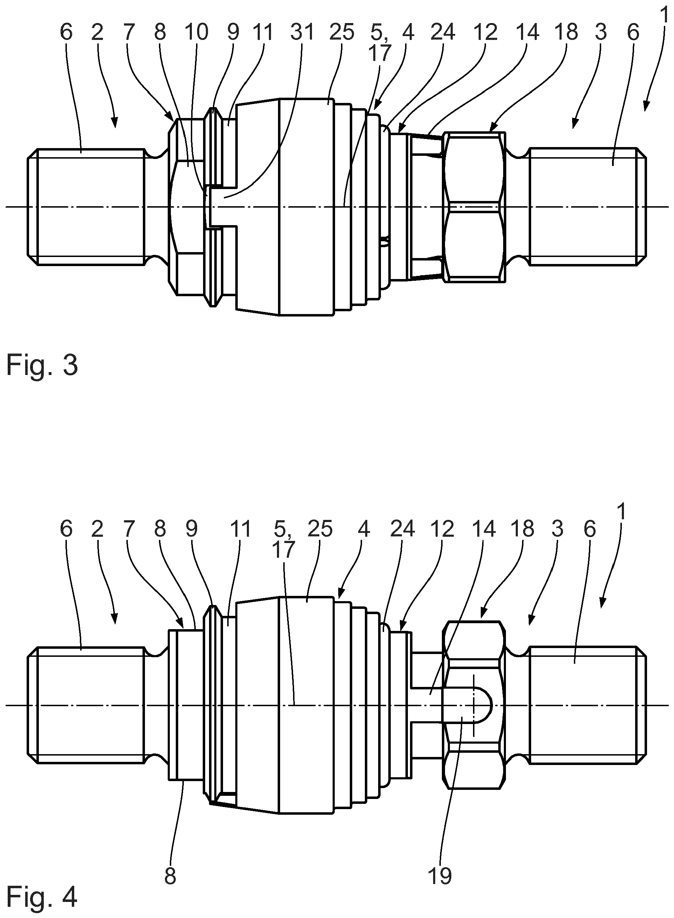

Eine in Fig. 1 bis 10 als Ganzes mit 1 bezeichnete Kupplungsvorrichtung 1 umfasst einen Kupplungsgrundkörper 2, einen damit verbindbaren Kupplungsstecker 3 und eine die Verbindung zwischen Kupplungsgrundkörper 2 und Kupplungsstecker 3 sichernde Sicherungseinheit 4.

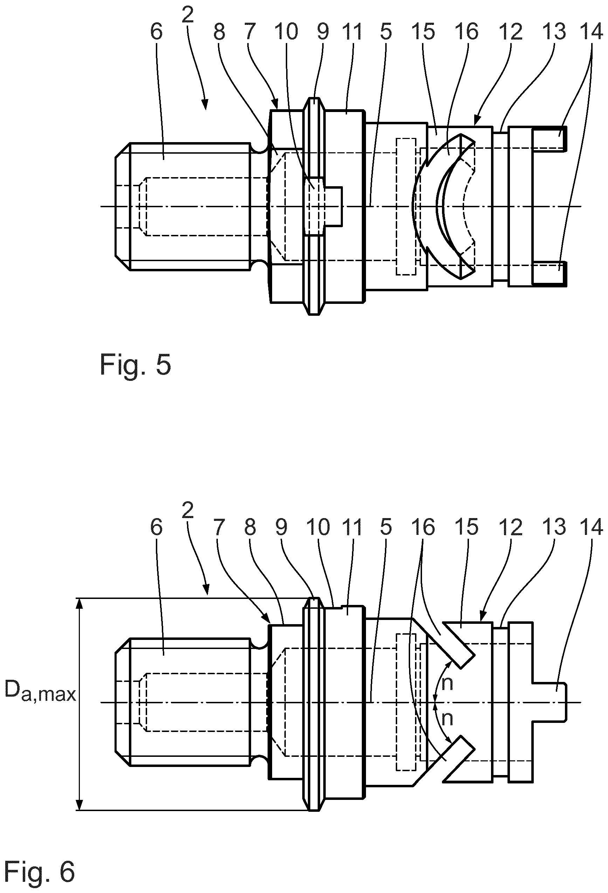

Nachfolgend wird der Kupplungsgrundkörper 2 anhand der Fig. 5 und 6 näher erläutert. Der Kupplungsgrundkörper 2 weist eine Längsachse 5 auf. An einem ersten in Fig. 5 und 6 links dargestellten Ende weist der Kupplungsgrundkörper 2 einen Anbindungsabschnitt 6 auf. Der Anbindungsabschnitt 6 dient zum Anbinden der Kupplungsvorrichtung 1 über den Kupplungsgrundkörper 2 an eine Gummiblase. Der Anbindungsabschnitt 6 ist als Gewindezapfen mit einem Außengewinde vom Typ G 1/4A-ISO 228-1 ausgeführt. Das Außengewinde ist ein Whitworth-Rohrgewinde, also ein zylindrisches Gewinde. Aufgrund der standardisierten Ausführung des Außengewindes ist die Anbindung des Kupplungsgrundkörpers 2 über den Anbindungsabschnitt 6 unkompliziert möglich.

Der Kupplungsgrundkörper 2 ist im Wesentlichen bezogen auf die Längsachse 5 rotationssymmetrisch ausgeführt. Entlang der Längsachse 5 schließt sich dem Anbindungsabschnitt 6 ein Werkzeugabschnitt 7 an. Der Werkzeugabschnitt 7 zeichnet sich durch zwei diametral gegenüberliegend angeordnete seitliche Abflachungen 8 aus, die ein Greifen des Kupplungsgrundkörpers 2 beispielsweise mittels eines Gabelschlüssels ermöglichen. Der Werkzeugabschnitt vereinfacht das Montieren des Kupplungsgrundkörpers 2 durch Einschrauben in eine Druckluftleitung. Der Kupplungsgrundkörper 2 ist einteilig aus Edelstahl 1.4305 ausgeführt. Der Kupplungsgrundkörper 2 kann auch aus einem anderen Material hergestellt sein.

Entlang der Längsachse 5 schließt sich dem Werkzeugabschnitt 7 ein Sicherungsringsteg 9 an. Der Sicherungsringsteg 9 ragt gegenüber dem Werkzeugabschnitt 7 in radialer Richtung bezogen auf die Längsachse 5 über. Im Bereich des Sicherungsringstegs 9 weist der Kupplungsgrundkörper 2 einen maximalen Außendurchmesser D_{a, max}. auf. Entlang der Längsachse 5 weist der Sicherungsringsteg 9 beidseitig eine Fase auf.

An dem Sicherungsringsteg 9 ist eine Entriegelungsaufnahme 10 vorgesehen. Die Entriegelungsaufnahme 10 ist dadurch ausgeführt, dass der Sicherungsringsteg 9 abgenommen, insbesondere ausgefräst ist. In dem Bereich der Entriegelungsaufnahme 10 weist der Sicherungsringsteg 9 in etwa den Außendurchmesser des entlang der Längsachse 5 nachfolgenden Zylinderabschnitts 11 auf.

Der Außendurchmesser des Zylinderabschnitts 11 entspricht im Wesentlichen dem des Werkzeugabschnitts 7.

Dem Zylinderabschnitt 11 schließt sich entlang der Längsachse 5 ein Aufnahmeabschnitt 12 an. Der Aufnahmeabschnitt 12 dient zur Aufnahme des Kupplungssteckers 3. Der Aufnahmeabschnitt 12 weist eine Außen-Umfangsnut 13 auf. An einer dem Anbindungsabschnitt 6 gegenüberliegenden Stirnfläche sind zwei Verdrehschutzelemente 14 einstückig am Kupplungsgrundkörper 2 angeformt. Die Verdrehschutzelemente 14 sind als Axialstifte ausgeführt, die sich entlang der Längsachse 5 erstrecken und bezogen auf die Längsachse 5 exzentrisch am Außenumfang des Kupplungsgrundkörpers 2 angeordnet sind. Insbesondere sind die Verdrehschutzelemente 14 bezogen auf die Längsachse 5 diametral gegenüberliegend angeordnet. Es ist auch denkbar, dass nur ein Verdrehschutzelement 14 vorgesehen ist. Insbesondere können auch mehr als zwei Verdrehschutzelemente 14 vorgesehen sein.

Die Entriegelungsaufnahme 10 ist bezogen auf die Längsachse 5 gegenüber den Verdrehschutzelementen 14 um 90° versetzt an dem Kupplungsgrundkörper 2 angeordnet.

Der Aufnahmeabschnitt umfasst einen Aufnahmeinnenraum, in den der Kupplungsstecker 3 einschiebbar ist. Der Aufnahmeinnenraum weist eine Standardgeometrie auf. Der Kupplungsgrundkörper 2 ist mit Standard-Kupplungssteckern, die insbesondere im Eurostecker-Format ausgeführt sind, koppelbar.

An einer im Wesentlichen zylindrischen Außenwand 15 des Aufnahmeabschnitts 12 sind zwei Verriegelungskulissen 16 angeordnet. Die Verriegelungskulissen 16 sind bezogen auf die Längsachse 5 diametral gegenüberliegend angeordnet. Die Verriegelungskulissen 16 sind als schlitzförmige Vertiefungen in der Außenwand 15 ausgeführt. Die Schlitze weisen eine Tiefe derart auf, dass die Verriegelungskulisse 16 die Außenwand 15 durchsetzt. Gegenüber der Längsachse 5 sind die Verriegelungskulissen 16 geneigt angeordnet. Der Neigungswinkel n beträgt jeweils 45°. Der Neigungswinkel n, also der Winkel, den eine Verriegelungskulisse in einer senkrechten Projektion gemäß Fig. 6 mit der Längsachse 5 einschließt, kann auch kleiner sein als 45°, insbesondere kleiner als 40°, insbesondere kleiner als 35°, insbesondere kleiner als 30° und insbesondere kleiner als 20°. Der Neigungswinkel n kann auch größer sein als 45°.

In dem Kupplungsgrundkörper 2 ist ein Druckluftventil 32 angeordnet. Das Druckluftventil 32 ist mehrteilig ausgeführt und umfasst eine äußere Ventil-Ringhülse 33, die mittels eines äußeren Dichtungselements 34 in Form eines O-Rings, insbesondere aus NBR, in der Innenbohrung des Kupplungsgrundkörpers 2 abgedichtet angeordnet ist. Die Ventil-Ringhülse 33 ist aus Messing hergestellt. In die Ventil-Ringhülse 33 ist eine Ventil-Düse 35 eingesetzt. Die Ventil-Düse 35 ist entlang der Längsachse 5 gegenüber dem Kupplungsgrundkörper 2 und der Ventil-Ringhülse 33 verlagerbar. An der Ventil-Düse 35 ist ein Düsen-Dichtungselement 36 am äußeren Umfang angeordnet. In Abhängigkeit der axialen Position der Ventil-Düse 35 in der Ventil-Ringhülse 33 ist das Ventil luftdurchlässig oder luftundurchlässig.

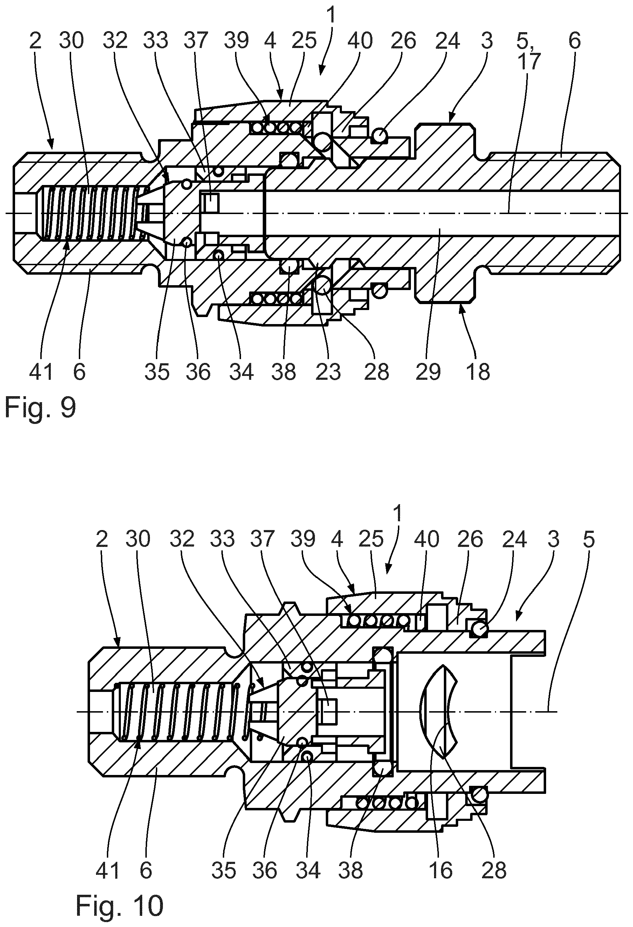

In der in Fig. 9 gezeigten Anordnung ist eine Luftströmung entlang der zentralen Durchgangsöffnungen 29, 30 des Kupplungsgrundkörpers 2 und des Kupplungssteckers 3 über eine Querbohrung 37 des Düsen-Dichtungselements 36 möglich.

In der in Fig. 10 gezeigten Anordnung ist der Kupplungsstecker 3 aus dem Kupplungsgrundkörper 2 entfernt. Infolge der Kraftbeaufschlagung durch das Ventilfederelement 41 wird die Ventil-Düse 35 von dem Anbindungsabschnitt 6 des Kupplungsgrundkörpers 2 weg verlagert. In dieser Anordnung liegt die Ventil-Düse 35 mit dem Düsen-Dichtungselement 36 radial abdichtend an einer Zylinderinnenwand der Ventil-Ringhülse 33 an. Eine Luftströmung über die Querbohrungen 37 ist nicht mehr möglich. Eine Umströmung der Ventil-Ringhülse ist durch das Dichtungselement 34 verhindert. In dieser Anordnung ist das Druckluftventil 32 geschlossen.

Der Kupplungsgrundkörper 2 weist eine konzentrisch zur Längsachse 5 angeordnete Durchgangsbohrung 30 auf. Entlang der Längsachse 5 ist der Innendurchmesser der Durchgangsbohrung 30 veränderlich. Im Bereich des Anbindungsabschnitts 6 ist der Innendurchmesser der Durchgangsbohrung 30 vergleichsweise klein und insbesondere minimal. Im Bereich des Aufnahmeabschnitts 12 ist der Innendurchmesser vergleichsweise groß, insbesondere größer als ein Außendurchmesser des Kupplungssteckers 3. Im Bereich des Aufnahmeabschnitts 12 ist eine Innen-Nut angeordnet, in die ein Stecker-Dichtungselement 38 in Form eines O-Rings aus NBR eingelegt ist. In der in Fig. 9 gezeigten Anordnung ist der Kupplungsstecker 3 in den Kupplungsgrundkörper 2 maximal eingeschoben. Der Kupplungsstecker 3 liegt mit dem Steckabschnitt 20 abdichtend im Aufnahmeabschnitt 12 des Kupplungsgrundkörpers 2 an.

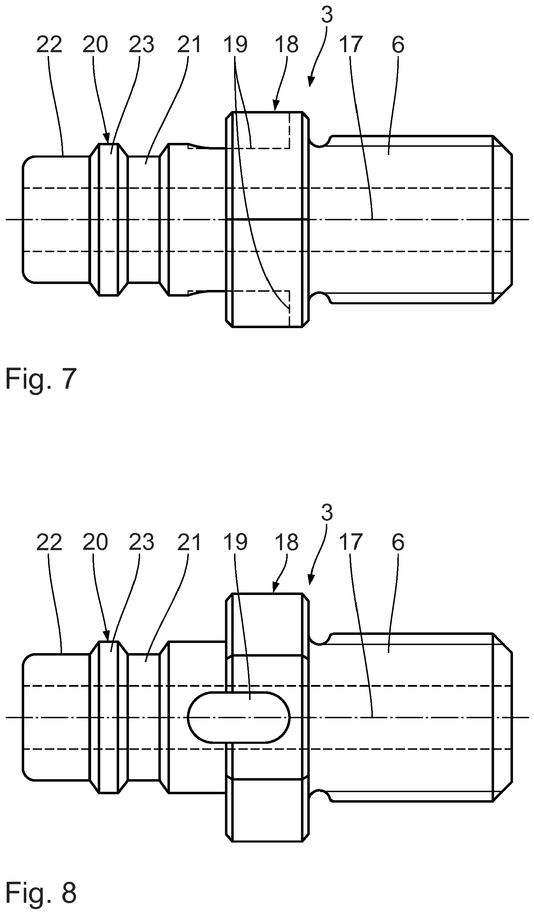

Nachfolgend wird der Kupplungsstecker 3 anhand von Fig. 7 und 8 näher erläutert. Der Kupplungsstecker 3 ist aus Edelstahl, insbesondere 1.4305, hergestellt. An einem in Fig. 7 und 8 rechts dargestellten Außenende weist der Kupplungsstecker 3 einen Anbindungsabschnitt 6 auf. Der Anbindungsabschnitt 6 des Kupplungssteckers 3 ist im Wesentlichen identisch ausgeführt mit dem Anbindungsabschnitt des Kupplungsgrundkörpers 2. Insbesondere weisen beide Anbindungsabschnitte 6 entlang der Längsachse 5 eine identische Gewindelänge von 16mm auf. Entlang einer Stecker-Längsachse 17 schließt sich an den Anbindungsabschnitt 6 ein Stecker-Werkzeugabschnitt 18 an. Der Stecker-Werkzeugabschnitt 18 ist als Außen-Sechskant ausgeführt. Mittels des Stecker-Werkzeugabschnitts 18 kann der Kupplungsstecker 3 mittels eines Schraubenschlüssels betätigt werden. Beispielsweise ist dadurch das Einschrauben des Kupplungssteckers mit dem Anbindungsabschnitt 6 in eine Druckluftleitung vereinfacht.

In den Stecker-Werkzeugabschnitt 18 sind zwei bezüglich der Stecker-Längsachse 17 diametral gegenüberliegende Verdrehschutzgegenelemente 19 integriert. Die Verdrehschutzgegenelemente 19 sind als langlochartige Ausfräsungen ausgeführt, die sich zumindest abschnittsweise entlang des Stecker-Werkzeugabschnitts 18 erstrecken. Die Verdrehschutzgegenelemente 19 sind exzentrisch zur Stecker-Längsachse 17 angeordnet und parallel zur Stecker-Längsachse 17 orientiert. Jedes Verdrehschutzgegenelement dient zur Aufnahme eines Verdrehschutzelements 14 des Kupplungsgrundkörpers 2.

Dem Stecker-Werkzeugabschnitt 18 schließt sich entlang der Stecker-Längsachse 17 ein Steckabschnitt 20 an. Der Steckabschnitt 20 dient zum Einstecken in den Aufnahmeabschnitt 12 des Kupplungsgrundkörpers 2. Der Steckabschnitt 20 weist eine Standardgeometrie in Form eines Eurosteckers auf. In einem dem Stecker-Werkzeugabschnitt 18 zugewandten Bereich weist der Steckabschnitt 20 eine Verriegelungsrille 21 auf. An einem stirnseitigen Außenbereich weist der Steckabschnitt 20 eine AußenDichtfläche 22 auf. Die Außendichtfläche 22 ist als äußere Zylindermantelfläche ausgeführt. Entlang der Stecker-Längsachse 17 sind die Außendichtfläche 22 und die Verriegelungsrille 21 durch einen Radialsteg 23 getrennt. Der Radialsteg 23 weist einen Außendurchmesser auf, der größer ist als der der Außendichtfläche 22 und der Verriegelungsrille 21.

Nachfolgend wird die Sicherungseinheit 4 anhand der Fig. 1, 2 und 9 näher erläutert. Die Sicherungseinheit 4 ist am Kupplungsgrundkörper 2 mittels eines Halterings 24 axial gehalten. Die Sicherungseinheit 4 ist unverlierbar am Kupplungsgrundkörper 2 angeordnet. Der Haltering 24 liegt in der dafür vorgesehenen Außen-Umfangsnut 13 des Kupplungsgrundkörpers 2 ein. Die Sicherungseinheit 4 weist eine Sicherungshülse 25 auf. Die Sicherungshülse 25 ist aus Edelstahl, insbesondere 1.4305, hergestellt. Die Sicherungshülse 25 weist einen radial nach innen vorstehenden Haltesteg 26 auf, mit dem die Sicherungshülse 25 in einer unbetätigten Anordnung am Haltering 24 anliegt. Der Innendurchmesser des Haltestegs 26 ist geringfügig größer als der Außendurchmesser des Kupplungsgrundkörpers 2 im Bereich des Aufnahmeabschnitts 12. Durch den Haltering 24 ist der Außendurchmesser des Kupplungsgrundkörpers 2 derart vergrößert, dass eine axiale Fixierung der Sicherungshülse 25 am Kupplungsgrundkörper 2 gewährleistet ist.

In den Verriegelungskulissen 16 des Kupplungsgrundkörpers 2 ist jeweils ein nadelförmiges Verriegelungselement 28 angeordnet. Die Verriegelungselemente 28 können beispielsweise als Zylinderstifte, insbesondere aus Edelstahl, insbesondere 1.4305, hergestellt sein. Die Verriegelungselemente 28 erstrecken sich jeweils parallel zueinander und insbesondere jeweils senkrecht zur Längsachse 5. Gemäß der Darstellung in Fig. 9 sind die Verriegelungselemente 28 senkrecht zur Zeichenebene orientiert. Die Verriegelungselemente 28 sind jeweils derart in den Verriegelungskulissen 16 angeordnet, dass sie zumindest bereichsweise an den Verriegelungskulissen 16 radial überstehen. Die Verriegelungselemente 28 verriegeln den Kupplungsstecker 3 im Aufnahmeabschnitt 12, indem der Radialsteg 23 von den Verriegelungselementen 28 hintergriffen wird. Bei einer Verlagerung der Sicherungshülse 25 entlang der Längsachse 5 zu dem Anbindungsabschnitt 6 des Kupplungsgrundkörpers 2 hin, also gemäß Fig. 9 von rechts nach links, wird das Verriegelungselement 28, insbesondere durch den Haltesteg 26, mit verlagert. Das Verriegelungselement 28 greift in die Verriegelungskulissen 16 des Kupplungsgrundkörpers 2 ein. Gemäß der Darstellung in Fig. 9 sind die Verriegelungselemente 28 aus dem Aufnahmeabschnitt 12 des Kupplungsgrundkörpers 2 entfernt. Der Kupplungsstecker 3 ist durch die Verriegelungselemente 28 axial nicht mehr gehalten, also entriegelt und damit freigegeben. In dieser Anordnung wird der Kupplungsstecker 3 aus dem Aufnahmeabschnitt 12 des Kupplungsgrundkörpers 2 gedrückt.

Ein Federelement 39 in Form einer Schraubenfeder ist in einem ringförmigen Zwischenraum angeordnet, der zwischen einer äußeren Zylindermantelwand des Kupplungsgrundkörpers 2 und einer inneren Zylindermantelwand der Sicherungshülse 25 gebildet ist. In axialer Richtung ist das Federelement 39 durch einen Absatz des Kupplungsgrundkörpers 2 einerseits und den Haltesteg 26 der Sicherungshülse 25 andererseits begrenzt. Das Federelement 39 ist an dem Haltesteg 26 über eine Federscheibe 40 abgestützt. Durch die Axialverlagerung der Sicherungshülse 25 wird das Federelement 39 über die Federscheibe 40 komprimiert, also gestaucht. Das Federelement 39 übt eine entsprechende Federgegenkraft auf die Sicherungshülse 25 auf. Damit ist gewährleistet, dass eine unbeabsichtigte Betätigung der Sicherungshülse 25 ausgeschlossen ist. Ein Entriegeln der Kupplungsvorrichtung 1 ist nur durch Überwinden der Federkraft des Federelements 39 möglich. Insbesondere ist gewährleistet, dass die Sicherungshülse 25 infolge der Federkraft des Federelements 39 automatisch in die Sicherungsposition gemäß Fig. 1 und 2 verlagert wird. In dieser Sicherungsposition ist das Druckluftventil 32 geöffnet und eine Verdrehsicherung zwischen dem Kupplungsgrundkörper 2 und dem Kupplungsstecker 3 gewährleistet.

In der Durchgangsöffnung 30 des Kupplungsgrundkörpers 2 ist das Ventil-Federelement 41 angeordnet. Das Ventil-Federelement 41 ist als Schraubenfeder ausgeführt, die axial durch einen Anschlag des Kupplungsgrundkörpers 2 und die Ventil-Düse 35 des Druckluftventils 32 begrenzt ist. Das Druckluftventil 32 ist zweiteilig ausgeführt mit der in einer Ventil-Ringhülse 33 axial verlagerbar angeordneten Ventil-Düse 35. An einem dem Ventil-Federelement 41 gegenüberliegenden Ende liegt die Ventil-Düse 35 stirnseitig am Kupplungsstecker 3 an. Der Kupplungsstecker 3 ist durch die den Radialsteg 23 hintergreifenden Verriegelungselemente 28 in axialer Richtung in dem Kupplungsgrundkörper 2 festgelegt. In dieser Anordnung gemäß Fig. 9 ragt die Ventil-Düse 35 in das Ventil-Federelement 41 hinein. Das Ventil-Federelement 41 ist durch die Ventil-Düse 35 in der Anordnung gemäß Fig. 9 vorgespannt. Das Ventil-Federelement 41 übt in dieser vorgespannten, gestauchten Anordnung eine Ventilkraft auf die Ventil-Düse 35 und somit mittelbar auf den Kupplungsstecker 3 aus. Durch Entriegeln des Kupplungssteckers 3, also durch Verlagern der Verriegelungselemente 28 entlang der Verriegelungskulissen 16 radial nach außen, wird der Kupplungsstecker 3 infolge der Federkraft des Ventil-Federelements 41 aus dem Kupplungsgrundkörper 2 herausgedrückt.

In der Anordnung gemäß Fig. 9 ist der Grundkörper 2 mit dem Kupplungsstecker 3 verbunden, aber entriegelt. Zum Verriegeln wird die Sicherungseinheit 4 mit der Sicherungshülse 25 zu dem Anbindungsabschnitt 6 des Kupplungssteckers 3, also gemäß Fig. 9 von links nach rechts, verlagert, bis der Haltesteg 26 an dem Haltering 24 anliegt. Durch die Verlagerung der Sicherungshülse 25 zum dem Kupplungsstecker 3 hin, werden die Verriegelungselemente 28 von dem Haltesteg 26 freigegeben und können selbsttätig in die Verriegelungskulissen 16 eingreifen. Insbesondere sind die Verriegelungselemente 28 über einen nicht dargestellten Bügel einteilig miteinander verbunden. Die Verriegelungselemente 28 sind einteilig ausgeführt und weisen im Wesentlichen eine U-Form auf.

In der verriegelten Anordnung sichert die Sicherungseinheit 4 die Verbindung zwischen dem Kupplungsgrundkörper 2 und dem Kupplungsstecker 3. In dieser Sicherungsposition der Kupplungsvorrichtung 1 ist das Ventil der Kupplungsvorrichtung 1 geöffnet. In der Sicherungsposition kann die Kupplungsvorrichtung 1 eine Druckluftverbindung bereitstellen. Insbesondere sind ein Durchgangskanal 29 des Kupplungssteckers 3 und die Durchgangsöffnung 30 des Kupplungsgrundkörpers 2 miteinander verbunden und durchgängig ausgeführt. In dieser Anordnung sind die Längsachse 5 und die Stecker-Längsachse 17 koaxial zueinander angeordnet.

Die Sicherungshülse 25 ist in der Sicherungsposition drehbar zur Längsachse 5 am Kupplungsgrundkörper 2 angeordnet. Die Sicherungshülse 25 weist einen sich entlang der Längsachse 5 erstreckenden Blockiersteg 31 auf. Der Blockiersteg 31 weist eine Breite auf, die der Breite der Entriegelungsaufnahme 10 entspricht. Zum Entriegeln der Kupplungsvorrichtung 1 ist es erforderlich, die Sicherungshülse 25 gegenüber dem Kupplungsgrundkörper 2 derart zu drehen, dass der Blockiersteg 31 mit der Entriegelungsaufnahme 10 fluchtet (vgl. Fig. 1).

Nachfolgend wird die Funktion der Kupplungsvorrichtung ausgehend von der Sicherungsposition gemäß Fig. 9 näher erläutert. In der Sicherungsposition ist der Kupplungsgrundkörper 2 mit dem Kupplungsstecker 3 verbunden. Die Kupplungsvorrichtung 1 ermöglicht eine Druckluftverbindung entlang der Durchgangsöffnungen 29, 30.

Dadurch, dass der Kupplungsgrundkörper 2 mit den Verdrehschutzelementen 14 in den Verdrehschutzgegenelementen 19 des Kupplungssteckers 3 einliegt, ist ein Verdrehschutz gewährleistet. Die Sicherungshülse 25 ist gegen eine Axialverlagerung entlang der Längsachse 5 gesichert. Eine Axialverlagerung der Sicherungshülse 25 ist durch den Blockiersteg 31 blockiert. Der Blockiersteg 31 liegt bei einer Axialverlagerung entlang der Längsachse 5 an dem Sicherungsringsteg 9 an.

In der Sicherungsposition ist das Druckluft-Ventil 32 der Kupplungsvorrichtung 1 geöffnet.

Um die Kupplungsvorrichtung 1 zu entriegeln, also die Verbindung zwischen dem Kupplungsgrundkörper 2 und dem Kupplungsstecker 3 zu lösen, wird die Sicherungshülse 25 zunächst so weit um die Längsachse 5 gedreht, bis der Blockiersteg 31 fluchtend zu der Entriegelungsaufnahme 10 angeordnet ist (vgl. Fig. 1). In dieser Anordnung kann die Sicherungshülse 25 entlang der Längsachse 5 gemäß Fig. 1 nach links, also zu dem Anbindungsabschnitt 6 des Kupplungsgrundkörpers 2 hingeschoben werden. Zusammen mit der Sicherungshülse 25 wird das an ihrem Innenumfang gehaltene Verriegelungselement 28 ebenfalls entlang der Längsachse 5 nach links, also zum Anbindungsabschnitt 6 des Kupplungsgrundkörpers 2 hinverlagert. Aufgrund der geneigten Ausführung der Verriegelungskulisse 16 wird das Verriegelungselement 28 aus dem Anbindungsabschnitt 12 und insbesondere aus dem Anbindungs-Innenraum bezogen auf die Längsachse 5 radial nach außen verlagert. Der in der Sicherungsposition hintergriffene und dadurch gesicherte Radialsteg 23 wird durch die Axialverlagerung der Sicherungshülse 25 freigegeben. Der Kupplungsstecker 3 kann von dem Kupplungsgrundkörper 2 getrennt werden. In der freigegebenen, getrennten Anordnung, die als Entriegelungsposition bezeichnet wird, ist das Ventil der Kupplungsvorrichtung 1, insbesondere des Kupplungsgrundkörpers 2, geschlossen. Das Ventil kann auch im Kupplungsstecker 3 angeordnet sein.

Sowohl der Kupplungsgrundkörper 2 als auch der Kupplungsstecker 3 können mit den standardisierten Eurostecksystemen 7.0, 7.2 und 7.8 gekuppelt und mit Druckluft beschickt werden. Die Kupplungsvorrichtung 1 und insbesondere der Kupplungsgrundkörper 2 gewährleisten eine Öffnungssicherheit. Eine Verdrehsicherheit ist dann gewährleistet, wenn der Kupplungsgrundkörper 2 mit dem Kupplungsstecker 3 kombiniert wird.

## Patentansprüche

1. Kupplungsvorrichtung (1) für eine Druckluftleitung umfassend
- einen Kupplungsgrundkörper (2) umfassend
a. eine Längsachse (5),
b. einen sich entlang der Längsachse (5) erstreckenden Aufnahmeabschnitt (12) zur Aufnahme eines Kupplungssteckers (3),
c. mindestens ein Verdrehschutzelement (14) zum Verdrehsichern des Kupplungsgrundkörpers (2) mit dem Kupplungsstecker (3),
- den mit dem Kupplungsgrundkörper (2) lösbar verbindbaren Kupplungsstecker (3) umfassend
d. einen Steckabschnitt (20) zum Einstecken in den Kupplungsgrundkörper (2),
e. mindestens ein Verdrehschutzgegenelement (19) zum Verdrehsichern des Kupplungssteckers (3) mit dem Kupplungsgrundkörper (2),
wobei der Kupplungsgrundkörper (2) und der Kupplungsstecker (3) in einer verbundenen Anordnung verdrehsicher bezüglich der Längsachse (5) miteinander verbunden sind,
- eine Sicherungseinheit (4) zum Sichern des mit dem Kupplungsgrundkörper (2) verbundenen Kupplungssteckers (3), wobei die Sicherungseinheit (4) zwischen einer Sicherungsposition und einer Entriegelungsposition am Kupplungsgrundkörper (3) in axialer Richtung der Längsachse (5) verlagerbar angeordnet ist, **dadurch gekennzeichnet, dass** in dem Kupplungsgrundkörper (2) ein Druckluftventil (32) angeordnet ist, das eine Ventil-Ringhülse (33) und eine in die Ventil-Ringhülse (33) eingesetzte Ventil-Düse (35) aufweist, wobei die Ventil-Düse (35) entlang der Längsachse (5) gegenüber dem Kupplungsgrundkörper (2) und der Ventil-Ringhülse (33) verlagerbar ist und wobei in Abhängigkeit der axialen Position der Ventil-Düse (35) in der Ventil-Ringhülse (33) das Druckluftventil (32) luftdurchlässig oder luftundurchlässig ist.

2. Kupplungsvorrichtung gemäß Anspruch 1, **dadurch gekennzeichnet, dass** der Aufnahmeabschnitt (12) eine Standardgeometrie aufweist.

3. Kupplungsvorrichtung gemäß einem der vorstehenden Ansprüche, **gekennzeichnet durch** eine Verriegelungskulisse (16), die insbesondere eine den Aufnahmeabschnitt (12) umgebende Außenwand (15) vollständig durchsetzt.

4. Kupplungsvorrichtung gemäß Anspruch 3, **dadurch gekennzeichnet, dass** die Verriegelungskulisse (16) gegenüber der Längsachse (5) mit einem Neigungswinkel (n) angeordnet ist.

5. Kupplungsvorrichtung gemäß einem der vorstehenden Ansprüche, **dadurch gekennzeichnet, dass** das Verdrehschutzelement (14) als exzentrisch bezüglich der Längsachse (5) angeordneter Axialstift ausgeführt ist.

6. Kupplungsvorrichtung gemäß einem der vorstehenden Ansprüche, **dadurch gekennzeichnet, dass** der Steckabschnitt (20) eine Standardgeometrie aufweist.

7. Kupplungsvorrichtung gemäß einem der vorstehenden Ansprüche, **dadurch gekennzeichnet, dass** das Verdrehschutzgegenelement (19) als exzentrisch bezüglich einer Stecker-Längsachse (17) angeordnete Axialausnehmung ausgeführt ist.

8. Kupplungsvorrichtung gemäß einem der vorstehenden Ansprüche, **dadurch gekennzeichnet, dass** die Sicherungseinheit (4) am Kupplungsgrundkörper (3) unverlierbar angeordnet ist.

9. Kupplungsvorrichtung gemäß einem der vorstehenden Ansprüche , **dadurch gekennzeichnet, dass** die Sicherungseinheit (4) eine Sicherungshülse (25) und ein von der Sicherungshülse (25) gehaltenes Verriegelungselement (28) aufweist.

10. Kupplungsvorrichtung gemäß Anspruch 9, **dadurch gekennzeichnet, dass** das Verriegelungselement (28) in der Verriegelungskulisse (16) angeordnet ist, wobei das Verriegelungselement (28) in der Sicherungsposition zum Verriegeln des Kupplungssteckers (3) in den Aufnahmeabschnitt (12) hineinragt und wobei das Verriegelungselement (28) in der Entriegelungsposition zum Freigeben des Kupplungssteckers (3) außerhalb des Aufnahmeabschnitts (12) angeordnet ist.

11. Kupplungsvorrichtung gemäß einem der vorstehenden Ansprüche, **dadurch gekennzeichnet, dass** die Sicherungseinheit (4) einen Blockiersteg (31) zum Blockieren einer Axialverlagerung in der Sicherungsposition aufweist, wobei der Blockiersteg (31) in der Entriegelungsposition in einer Entriegelungsaufnahme (10), die insbesondere an einem Sicherungsringsteg (9) angeordnet ist, der insbesondere an dem Kupplungsgrundkörper (2) angeordnet ist, zumindest abschnittsweise angeordnet ist.

## Claims

1. Coupling device (1) for a compressed air line comprising
- a coupling main body (2) comprising
a. a longitudinal axis (5),
b. an accommodation portion (12) for accommodation of a coupling insert (3), the accommodation portion (12) extending along the longitudinal axis (5),
c. at least one anti-rotation member (14) to prevent rotation of the coupling main body (2) in relation to the coupling insert (3),
- the coupling insert (3), which is detachably connectable to the coupling main body (2) and comprises
d. an insert portion (20) to be inserted into the coupling main body (2),
e. at least one anti-rotation counter member (19) to prevent rotation of the coupling insert (3) in relation to the coupling main body (2),
wherein the coupling main body (2) and the coupling insert (3) in a connected arrangement are interconnected such as to prevent rotation thereof in relation to the longitudinal axis (5),
- a securing unit (4) to secure the coupling insert (3) connected to the coupling main body (2), wherein the securing unit (4) is arranged on the coupling main body (3) such as to be displaceable in an axial direction of the longitudinal axis (5) between a secure position and an unlocked position,
**characterized in that**
a compressed air valve (32) is arranged in the coupling main body (2), said compressed air valve (32) having a valve annular sleeve (33) and a valve nozzle (35) inserted in the valve annular sleeve (33), wherein the valve nozzle (35) is displaceable along the longitudinal axis (5) in relation to the coupling main body (2) and the valve annular sleeve (33), and wherein the compressed air valve (32) is permeable to air or impermeable to air depending on the axial position of the valve nozzle (35) in the valve annular sleeve (33).

2. Coupling device as claimed in claim 1, **characterized in that** the accommodation portion (12) has a standard geometry.

3. Coupling device as claimed in any one of the preceding claims, **characterized by** a locking slotted link (16), which in particular passes entirely through an external wall (15), which surrounds the accommodation portion (12).

4. Coupling device as claimed in claim 3, **characterized in that** the locking slotted link (16) is arranged at an inclination angle (n) in relation to the longitudinal axis (5).

5. Coupling device as claimed in any one of the preceding claims, **characterized in that** the anti-rotation member (14) is configured as an axial pin arranged eccentrically in relation to the longitudinal axis (5).

6. Coupling device as claimed in any one of the preceding claims, **characterized in that** the insert portion (20) has a standard geometry.

7. Coupling device as claimed in any one of the preceding claims, **characterized in that** the anti-rotation counter member (19) is configured as an axial recess arranged eccentrically in relation to an insert longitudinal axis (17).

8. Coupling device as claimed in any one of the preceding claims, **characterized in that** the securing unit (4) is arranged on the coupling main body (3) in such a way that it cannot get lost.

9. Coupling device as claimed in any one of the preceding claims, **characterized in that** the securing unit (4) has a securing sleeve (25) and a locking member (28) held by the securing sleeve (25).

10. Coupling device as claimed in claim 9, **characterized in that** the locking member (28) is arranged in the locking slotted link (16), wherein the locking member (28) in the secure position protrudes into the accommodation portion (12) for locking the coupling insert (3), and wherein the locking member (28) in the unlocked position is arranged outside the accommodation portion (12) to release the coupling insert (3).

11. Coupling device as claimed in any one of the preceding claims, **characterized in that** the securing unit (4) has a blocking web (31) for blocking an axial displacement in the secure position, wherein the blocking web (31) in the unlocked position is arranged in an unlocking receptacle (10) at least partly, said unlocking receptacle (19) being arranged in particular on a securing annular web (9), which is in particular arranged on the coupling main body (2).

## Revendications

1. Dispositif d'accouplement (1), destiné à un conduit d'air comprimé, comprenant
- un corps de base d'accouplement (2) comprenant
a. un axe longitudinal (5),
b. une partie de réception (12) s'étendant le long de l'axe longitudinal (5) et destinée à recevoir un connecteur d'accouplement (3),
c. au moins un élément anti-rotation (14) destiné à empêcher le corps de base d'accouplement (2) de tourner avec le connecteur d'accouplement (3),
- le connecteur d'accouplement (3), qui peut être relié de façon amovible au corps de base d'accouplement (2), comprenant
d. une partie d'enfichage (20) destinée à s'enficher dans le corps de base d'accouplement (2),
e. au moins un contre-élément anti-rotation (19) destiné à empêcher le connecteur d'accouplement (3) de tourner avec le corps de base d'accouplement (2),
le corps de base d'accouplement (2) et le connecteur d'accouplement (3) étant reliés entre eux en un ensemble relié solidairement en rotation par rapport à l'axe longitudinal (5),
- une unité de fixation (4) destinée à fixer le connecteur d'accouplement (3), relié au corps de base d'accouplement (2), l'unité de fixation (4) étant disposée de façon déplaçable entre une position de fixation et une position de déverrouillage sur le corps de base d'accouplement (3) dans la direction axiale de l'axe longitudinal (5),
**caractérisé en ce que**
une soupape d'air comprimé (32) est disposée dans le corps de base d'accouplement (2), laquelle soupape comporte un manchon annulaire (33) et une buse (35) insérée dans le manchon annulaire (33), la buse (35) étant déplaçable le long de l'axe longitudinal (5) par rapport au corps de base d'accouplement (2) et au manchon annulaire (33) et la vanne d'air comprimé (32) laissant passer l'air ou ne laissant pas passer l'air en fonction de la position axiale de la buse (35) dans le manchon annulaire (33).

2. Dispositif d'accouplement selon la revendication 1, **caractérisé en ce que** la partie de réception (12) a une géométrie standard.

3. Dispositif d'accouplement selon l'une des revendications précédentes, **caractérisé par** une coulisse de verrouillage (16) qui traverse entièrement en particulier une paroi extérieure (15) entourant la partie de réception (12).

4. Dispositif d'accouplement selon la revendication 3, **caractérisé en ce que** la coulisse de verrouillage (16) est disposée avec un angle d'inclinaison (n) par rapport à l'axe longitudinal (5).

5. Dispositif d'accouplement selon l'une des revendications précédentes, **caractérisé en ce que** l'élément anti-rotation (14) est réalisé sous la forme d'une tige axiale disposée de façon excentrée par rapport à l'axe longitudinal (5).

6. Dispositif d'accouplement selon l'une des revendications précédentes, **caractérisé en ce que** la partie d'enfichage (20) a une géométrie standard.

7. Dispositif d'accouplement selon l'une des revendications précédentes, **caractérisé en ce que** le contre-élément anti-rotation (19) est réalisé sous la forme d'un évidement axial disposé de manière excentrée par rapport à un axe longitudinal de connecteur (17).

8. Dispositif d'accouplement selon l'une des revendications précédentes, **caractérisé en ce que** l'unité de fixation (4) est disposée de manière imperdable au niveau du corps d'accouplement (3).

9. Dispositif d'accouplement selon l'une des revendications précédentes, **caractérisé en ce que** l'unité de fixation (4) comporte un manchon de fixation (25) et un élément de verrouillage (28) maintenu par le manchon de fixation (25).

10. Dispositif d'accouplement selon la revendication 9, **caractérisé en ce que** l'élément de verrouillage (28) est disposé dans la coulisse de verrouillage (16), l'élément de verrouillage (28) faisant saillie, dans la position de fixation, dans la partie de réception (12) pour verrouiller le connecteur d'accouplement (3) et l'élément de verrouillage (28) étant disposé, dans la position de déverrouillage, à l'extérieur de la partie de réception (12) pour libérer le connecteur d'accouplement (3).

11. Dispositif d'accouplement selon l'une des revendications précédentes, **caractérisé en ce que** l'unité de fixation (4) comporte une nervure de blocage (31) destinée à bloquer un déplacement axial dans la position de fixation, la nervure de blocage (31) étant disposée au moins en partie, dans la position de déverrouillage, dans un logement de déverrouillage (10) qui est disposé en particulier au niveau d'une nervure annulaire de fixation (9) qui est disposé en particulier au niveau du corps de base d'accouplement (2).
